# FASCICULE DE BREVET EUROPEEN

(11) **EP 0 581 685 B1**
(45) Date de publication et mention de la délivrance du brevet: **13.01.1999**
(21) Numéro de dépôt: 93401975.3
(22) Date de dépôt: 29.07.1993
(51) Int. Cl.: B60H 1/32, F25B 1/00, F25D 23/00

(54) **Dispositif de climatisation, en particulier pour véhicule automobile**
Klimaanlage, insbesondere für ein Kraftfahrzeug
Airconditioning device, in particular for a motor vehicle

(30) Priorité: 31.07.1992 FR 9209574
(43) Date de publication de la demande: 02.02.1994
(73) Titulaire: VALEO CLIMATISATION, 78321 La Verrière (FR)
(72) Inventeur: Dauvergne, Jean, F-95470 Fosses (FR)
(74) Mandataire: Gamonal, Didier

(56) Documents cités:
- CH-A- 629 585
- FR-A- 2 593 122
- GB-A- 743 888
- GB-A- 2 023 352
- US-A- 3 844 130
- US-A- 4 217 764

## Description

L'invention concerne un dispositif de climatisation destiné tout particulièrement à fournir de l'air climatisé ou conditionné dans l'habitacle d'un véhicule automobile.

Un dispositif de climatisation comprend, de façon classique tel que celui décrit dans le document GB-A-743888, un compresseur, un condenseur, un détendeur et un évaporateur reliés pour former un circuit fermé parcouru par un fluide frigorigène, ainsi qu'un ventilateur propre à envoyer un flux d'air au travers du condenseur, ce dispositif comprenant un module pré-assemblé comprenant le compresseur, le condenseur, le ventilateur et le moteur électrique commun, ainsi que des conduits de raccordement à l'évaporateur et au détendeur.

Ce dispositif est propre à équiper un véhicule automobile à moteur à combustion interne refroidi par un radiateur de refroidissement traversé par un flux d'air fourni par le ventilateur du condenseur.

Le compresseur refoule le fluide frigorigène à l'état gazeux dans le condenseur, où ce fluide est refroidi et condensé par échange thermique avec le flux d'air mis en circulation par le ventilateur. Le fluide frigorigène ainsi condensé à l'état liquide transite ensuite, le cas échéant, par une bouteille déshydratante avant d'être détendu dans le détendeur qui est généralement placé à l'entrée de l'évaporateur. Le fluide frigorigène s'évapore dans l'évaporateur en absorbant de la chaleur d'un flux d'air mis en circulation par un pulseur, puis il retourne à l'état gazeux vers le compresseur. L'air refroidi dans l'évaporateur et mis en circulation par le pulseur est envoyé dans l'habitacle.

Dans le cas où un tel dispositif de climatisation est monté dans un véhicule automobile classique, propulsé par un moteur à combustion interne, le compresseur est en général entraîné par le moteur du véhicule, au travers d'une transmission mécanique, par exemple du type à courroie et poulies, et au moyen d'un embrayage commandé par une unité appropriée. Le ventilateur est, quant à lui, entraîné par un moteur électrique qui lui est propre.

Cette solution connue a pour inconvénient de nécessiter une transmission mécanique encombrante entre le moteur du véhicule et le compresseur. De plus, il est nécessaire de placer le compresseur à proximité du moteur du véhicule.

Dans le cas des véhicules automobiles à moteur électrique, ou dans le cas de certains types de véhicules automobiles classiques à moteur à combustion interne, le compresseur est entraîné par un moteur électrique, ce qui nécessite de prévoir une puissance électrique suffisante.

Un autre inconvénient des dispositifs de climatisation connus réside dans le fait qu'ils sont conçus essentiellement pour être installés sur les véhicules automobiles lors de leur montage sur les chaînes de fabrication.

L'invention a notamment pour but de surmonter les inconvénients précités.

C'est, en particulier, un but de l'invention de procurer un dispositif de climatisation de structure peu encombrante et susceptible d'être implanté dans un endroit qui peut être éloigné du moteur du véhicule automobile.

C'est aussi un but de l'invention de procurer un tel dispositif qui peut être facilement installé sur un véhicule automobile, soit lors de sa fabrication sur une chaîne de montage, soit postérieurement à sa fabrication.

C'est encore un but de l'invention de procurer un tel dispositif de climatisation qui convient aussi bien à des véhicules automobiles classiques, propulsés par un moteur à combustion interne, qu'à des véhicules propulsés par un moteur électrique.

L'invention propose à cet effet un dispositif de climatisation du type défini en introduction, caractérisé en ce que le radiateur de refroidissement fait également partie du module pré-assemblé.

Le dispositif de l'invention a également pour avantage de pouvoir être installé facilement à bord d'un véhicule automobile, postérieurement à sa fabrication. Ce module pré-assemblé peut être installé en tout endroit approprié du véhicule automobile, non seulement sous le capot moteur, mais éventuellement dans le coffre.

De plus, on fait l'économie soit d'une transmission encombrante entre le moteur du véhicule et le compresseur, soit d'un deuxième moteur électrique, spécialement dans le cas des véhicules à propulsion électrique.

Du fait que c'est un même moteur électrique qui entraîne le compresseur et le ventilateur, l'ensemble ainsi constitué peut être placé à proximité du condenseur et donc dans un emplacement approprié qui n'est pas nécessairement à proximité immédiate du moteur du véhicule.

Toutefois, un tel dispositif fonctionne de façon cohérente en ce qui concerne les puissances. En effet, si le besoin en puissance du dispositif commande de réduire le débit du compresseur, on peut à la fois réduire la vitesse du compresseur et celle du ventilateur. Autrement dit, on adapte en même temps la puissance du compresseur.

Selon une autre caractéristique de l'invention, ce module pré-assemblé comprend un support sur lequel sont montés le compresseur, le condenseur, le ventilateur et le moteur électrique.

Ce module pré-assemblé peut comprendre aussi une bouteille déshydratante, cette dernière étant située entre le condenseur et le détendeur.

Le dispositif de climatisation de l'invention convient aussi bien aux véhicules automobiles propulsés par un moteur à combustion interne, qu'aux véhicules automobiles propulsés par un moteur électrique.

Le dispositif comprend avantageusement un autre ventilateur propre à fournir un flux d'air au travers du radiateur de refroidissement et du condenseur, ce second ventilateur étant entraîné par un moteur électrique indépendant.

Ce second ventilateur fait avantageusement partie du module pré-assemblé et est donc aussi monté sur le support commun.

Avantageusement, le moteur électrique commun comprend deux bouts d'arbre propres à entraîner respectivement le compresseur et le ventilateur.

Dans une forme de réalisation préférée de l'invention, le dispositif comprend un boîtier étanche dans lequel sont logés le compresseur et le moteur électrique commun, ce qui évite tout risque de fuite de fluide frigorigène dont les conséquences seraient nuisibles pour l'environnement.

Selon une autre caractéristique de l'invention, le boîtier étanche loge en outre une partie d'un couplage magnétique qui est calée en rotation sur l'un des deux bouts d'arbre, et dont une autre partie est située à l'extérieur du boîtier et est solidaire en rotation du ventilateur.

De cette manière, le moteur et son arbre d'entraînement peut être complètement logé à l'intérieur du boîtier étanche, ce qui évite d'avoir recours à des joints tournants pouvant être une source de fuite pour le fluide frigorigène.

Dans la description qui suit, faite à titre d'exemple, on se réfère aux dessins annexés, sur lesquels :
- la figure 1 est une représentation schématique d'un dispositif destiné particulièrement, mais non exclusivement, à une véhicule à moteur électrique ;
- la figure 2 est une représentation schématique d'un dispositif selon l'invention destiné à un véhicule à moteur à combustion interne ; et
- la figure 3 est une vue partielle en coupe axiale d'un ensemble propre à faire partie du dispositif de la figure 1 ou de celui de la figure 2, cet ensemble comprenant un moteur électrique d'entraînement commun, ainsi qu'un compresseur et un ventilateur.

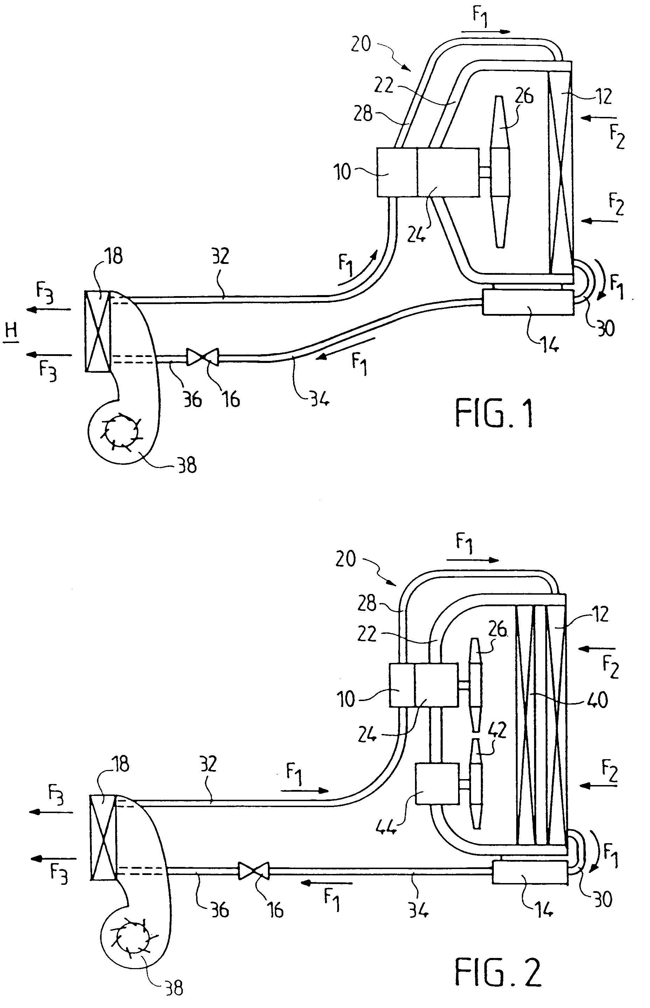

Le dispositif représenté à la figure 1 comprend un compresseur 10, un condenseur 12, une bouteille déshydratante 14, un détendeur 16 et un évaporateur 18 reliés pour former un circuit fermé et traversés, dans cet ordre (flèches F1), par un fluide frigorigène.

Le dispositif est réalisé en partie sous la forme d'un module pré-assemblé 20 comprenant un support 22 sur lequel est monté le condenseur 12. Sur le support 22 est également monté un moteur électrique 24 servant à l'entraînement simultané du compresseur 10 et d'un ventilateur 26 propre à faire circuler un flux d'air au travers du condenseur 12, comme indiqué par les flèches F2. Le support 22 porte en outre une bouteille déshydratante 14 qui est disposée immédiatement en aval du condenseur 12 par rapport au sens de circulation du fluide frigorigène (flèches F1).

Le compresseur 10 est relié au condenseur 12 par une conduite 28, et le condenseur est lui-même relié à la bouteille déshydratante 14 par une conduite 30.

Le module pré-assemblé 20 est ainsi constitué du support 22, de l'ensemble formé par le moteur commun 24, le compresseur 10 et le ventilateur 26, du condenseur 12, de la bouteille déshydratante 14 ainsi que des conduites 28 et 30.

Le module ainsi constitué est relié à l'évaporateur 18 par une conduite d'admission 32 et au détendeur 16 par une conduite de sortie 34. Le détendeur 16 est situé à proximité immédiate de l'évaporateur 18 et est relié à celui-ci par une conduite 36.

L'évaporateur 18 est associé à un pulseur d'air 38 propre à envoyer de l'air à travers l'évaporateur et à l'envoyer ensuite dans l'habitacle H d'un véhicule automobile, comme indiqué par les flèches F3.

Dans ce dispositif, le compresseur 10 refoule le fluide frigorigène à l'état gazeux vers le condenseur 12, dans lequel ce fluide est refroidi et condensé par échange thermique avec l'air mis en circulation par le ventilateur 26. Le fluide condensé transite par la bouteille déshydratante 14 avant d'être détendu dans le détendeur 16 et d'être envoyé vers l'évaporateur 18 où il s'évapore et absorbe ainsi de la chaleur de l'air mis en circulation par le pulseur 38. L'air ainsi refroidi est envoyé dans l'habitacle H au travers du pulseur 38.

On comprendra que le module 20 peut être installé à bord d'un véhicule automobile soit lors de sa fabrication, soit ultérieurement et que ce module peut être placé en tout endroit approprié du véhicule automobile et pas nécessairement à proximité immédiate du moteur du véhicule.

Le dispositif de la figure 1 convient tout particulièrement à des véhicules propulsés par un moteur électrique, mais peut s'adapter aussi à des véhicules classiques propulsés par un moteur à combustion interne.

On se réfère maintenant à la figure 2 qui représente un dispositif selon l'invention, dans une autre variante de réalisation convenant tout particulièrement aux véhicules à moteur à combustion interne.

Le dispositif de la figure 2 comporte des éléments communs avec celui de la figure 1, ces éléments communs étant désignés par les mêmes références numériques.

Le module 20 du dispositif de la figure 2 comprend en outre un radiateur 40 servant au refroidissement du moteur à combustion interne du véhicule automobile équipé du dispositif. Le radiateur 40 est porté par le support 22 et placé à proximité du condenseur 12, c'est-à-dire en aval de celui-ci par rapport au sens de circulation de l'air (flèches F2).

Le module 20 comprend en outre un second ventilateur 42 entraîné par un moteur électrique indépendant 44, qui est monté sur le support 22.

Ainsi, lorsque le dispositif de climatisation n'est pas utilisé, le moteur commun 24 est arrêté et le ventilateur 26 ne fonctionne pas. Par contre, le second ventilateur 42 est actionné le cas échéant pour faire circuler de l'air au travers du radiateur 40 et au travers du condenseur 12, lequel condenseur n'est pas parcouru par le fluide frigorigène.

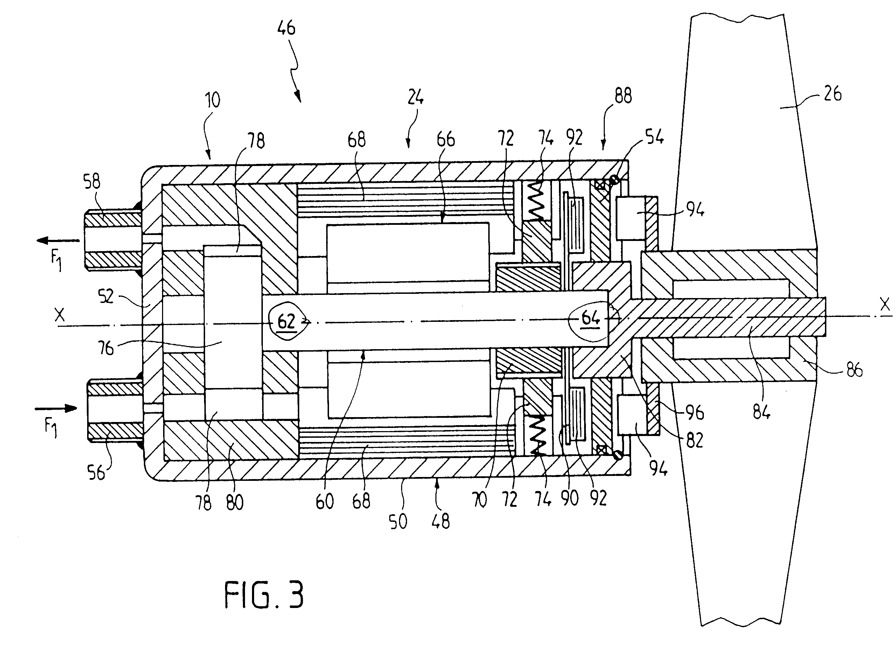

On se réfère maintenant à la figure 3 qui représente un ensemble 46 formé par la réunion d'un moteur commun 24, d'un compresseur 10 et d'un ventilateur 26.

L'ensemble 46 comprend un boîtier 48 formé par une paroi cylindrique 50 dont dépend un fond 52 et par un couvercle 54, formé en un matériau amagnétique, et fixé de façon étanche près de l'extrémité libre de la paroi cylindrique 50.

Le fond 52 est muni d'une tubulure d'entrée 56 susceptible d'être raccordée à l'évaporateur 18 au travers de la conduite 32 et une tubulure de sortie 58 susceptible d'être reliée au condenseur 12, et plus particulièrement à la bouteille déshydratante 14, au travers de la conduite 34.

Le moteur 24 est logé complètement à l'intérieur du boîtier 48 et il comprend un arbre 60 s'étendant dans une direction XX et présentant deux bouts 62 et 64 disposés respectivement près du fond 52 et près du couvercle 54.

L'arbre 60 est solidaire d'un rotor 66 qui est entouré par des aimants permanents 68. Sur le bout 64 est monté un collecteur 70 propre à coopérer avec des balais 72 sollicités chacun par un ressort 74.

Sur le bout 62 de l'arbre 60 est calé un rotor de pompe 76 muni de palettes 78 qui se déplacent dans des encoches radiales du rotor. Les palettes 78 se déplacent dans une chambre excentrée 80 pour réaliser la compression du fluide frigorigène à l'état gazeux qui pénètre par la tubulure 56 et ressort par la tubulure 58.

Le bout 64 de l'arbre 60 tourne dans un palier 82 porté par le couvercle 54 et prolongé par un arbre 84. Sur l'arbre 84 est monté à rotation un moyeu 86 portant le ventilateur 26.

Le ventilateur 26 qui se trouve à l'extérieur du boîtier est entraîné par le moteur au moyen d'un couplage magnétique 88. ce dernier comprend un rotor 90 situé à l'intérieur du boîtier et portant des aimants 92. Ces aimants 92 sont propres à coopérer magnétiquement, au travers du couvercle 54 en matériau amagnétique, avec des éléments de couplage magnétique 94. Ces éléments 94 sont disposés de l'autre côté du couvercle 54 et portés par un rotor 96 solidaire en rotation du moyeu 86.

Ainsi, le couplage magnétique est réalisé au travers du couvercle étanche 54.

Du fait que le moteur 24 et le compresseur 10 sont montés hermétiquement dans un boîtier étanche, il n'est pas nécessaire d'avoir de joints d'arbre tournants. De ce fait, on minimise les risques de fuites de fluide frigorigène, qui sont nuisibles pour l'environnement.

Bien entendu, l'invention n'est pas limitée aux formes de réalisation décrites précédemment à titre d'exemple et s'étend à d'autres variantes.

Le dispositif s'applique essentiellement aux véhicules automobiles.

## Revendications

1. Dispositif de climatisation, en particulier pour véhicule automobile, comprenant un compresseur (10), un condenseur (12), un détendeur (16) et un évaporateur (18) reliés pour former un circuit fermé parcouru par un fluide frigorigène, un ventilateur (26) propre à envoyer un flux d'air au travers du condenseur (12), ainsi qu'un moteur électrique commun (24) pour l'entraînement du compresseur (10) et du ventilateur (26), ledit dispositif comprenant un module pré-assemblé (20) comprenant le compresseur (10), le condenseur (12), le ventilateur (26) et le moteur électrique commun (24), ainsi que des conduits de raccordement (32,34) à l'évaporateur (18) et au détendeur (16) et du type selon lequel ce dispositif est propre à équiper un véhicule automobile à moteur à combustion interne refroidi par un radiateur de refroidissement (40) traversé par un flux d'air fourni par le ventilateur (26) du condenseur (12), caractérisé en ce que le radiateur de refroidissement (40) fait également partie du module pré-assemblé (20).

2. Dispositif selon la revendication 1, caractérisé en ce que le module pré-assemblé (20) comprend un support (22) sur lequel sont montés le compresseur (10), le condenseur (12), le ventilateur (27) et le moteur électrique (24).

3. Dispositif selon l'une des revendications 1 ou 2, caractérisé en ce que le module pré-assemblé (20) comprend aussi une bouteille déshydratante (14).

4. Dispositif selon la revendication 1, caractérisé en ce qu'il comprend un autre ventilateur (42) propre à fournir un flux d'air au travers du radiateur de refroidissement (40) et du condenseur (12), et entraînée par un moteur indépendant (44).

5. Dispositif selon l'une des revendications 1 à 4, caractérisé en ce que le moteur électrique (24) comprend deux bouts d'arbre (62,64) propres à entraîner respectivement le compresseur (10) et le ventilateur (26).

6. Dispositif selon la revendication 5, caractérisé en ce qu'il comprend un boîtier étanche (48) dans lequel sont logés le compresseur (10) et le moteur électrique commun (24).

7. Dispositif selon la revendications 6, caractérisé en ce que le boîtier étanche (48) loge en outre une partie (90,92) d'un couplage magnétique (88) solidaire en rotation d'un des bouts d'arbre (64), et dont une autre partie (94,96) est située à l'extérieur du boîtier et est solidaire en rotation du ventilateur (26).

## Claims

1. An air conditioning apparatus, in particular for a motor vehicle, comprising a compressor (10), a condenser (12), an expansion device (16), and an evaporator (18), which are connected together to constitute a closed circuit through which a refrigerant fluid is passed, a fan (26) which is arranged to drive a stream of air through the condenser (12), together with a common electric motor (24) for driving the compressor (10) and the fan (26), the said apparatus comprising a preassembled module (20) including the compressor (10), the condenser (12), the fan (26), and the common electric motor (24), together with ducts (32, 34) for connection to the evaporator (18) and expansion device (16), and of the type in which the apparatus is adapted to equip a motor vehicle having an internal combustion engine which is cooled by a cooling radiator (40) through which there passes a stream of air supplied by the fan (26) of the condenser (12), characterised in that the cooling radiator (40) is also a part of the preassembled module (20).

2. Apparatus according to Claim 1, characterised in that the preassembled module (20) comprises a support member (22) on which are mounted the compressor (10), the condenser (12), the fan (27), and the electric motor (24.

3. Apparatus according to Claim 1 or Claim 2, characterised in that the preassembled module (20) further includes a dehydration bottle (14).

4. Apparatus according to Claim 1, characterised in that it includes a further fan (42) which is adapted to drive a stream of air through the cooling radiator (40) and condenser (12), and which is driven by an independent motor (44).

5. Apparatus according to one of Claims 1 to 4, characterised in that the common electric motor (24) has two shaft ends (62, 64) which are arranged to drive the compressor (10) and the fan (26) respectively.

6. Apparatus according to Claim 5, characterised in that it comprises a sealed casing (48) in which the compressor (10) and the common electric motor (24) are mounted.

7. Apparatus according to Claim 6, characterised in that the sealed casing (48) further contains one part (90, 92) of a magnetic Coupling (88) which is secured in rotation to one of the shaft ends (64), and of which another part (94, 96) is situated on the outside of the casing and is rotatable with the fan (26).

## Patentansprüche

1. Klimaanlage, insbesondere für Kraftfahrzeuge, umfassend einen Kompressor (10), einen Kondensator (12), ein Druckminderventil (16) und einen Verdampfer (18), die miteinander verbunden sind, um einen geschlossenen Kreislauf zu bilden, der von einem Kältemittel durchströmt wird, einen Ventilator (26) der einen Luftstrom durch den Kondensator (12) leiten kann, sowie einen gemeinsamen Elektromotor (24) für den Antrieb des Kompressors (10) und des Ventilators (26), wobei die besagte Anlage ein vormontiertes Modul (20) enthält, das den Kompressor (10), den Kondensator (12), den Ventilator (26) und den gemeinsamen Elektromotor (24) sowie Anschlußleitungen (32, 34) an den Verdampfer (18) und an das Druckminderventil (16) umfaßt, wobei diese Anlage ein Kraftfahrzeug mit Verbrennungsmotor ausrüsten kann, der durch einen Kühlradiator (40) gekühlt wird, durch den ein vom Ventilator (26) des Kondensators (12) gelieferter Luftstrom strömt , **dadurch gekennzeichnet,** daß der Kühlradiator (40) ebenfalls ein Bestandteil des vormontierten Moduls (20) ist.

2. Klimaanlage nach Anspruch 1, **dadurch gekennzeichnet,** daß das vormontierte Modul (20) eine Halterung (22) umfaßt, auf der der Kompressor (10), der Kondensator (12), der Ventilator (27) und der Elektromotor (24) angebracht sind.

3. Klimaanlage nach einem der Ansprüche 1 oder 2, **dadurch gekennzeichnet,** daß das vormontierte Modul (20) außerdem eine Entwässerungsflasche (14) umfaßt.

4. Klimaanlage nach Anspruch 1, **dadurch gekennzeichnet,** daß sie einen anderen Ventilator (42) umfaßt, der einen Lufstrom durch den Kühlradiator (40) und den Kondensator (12) liefern kann und der durch einen unabhängigen Motor (44) angetrieben wird.

5. Klimaanlage nach einem der Ansprüche 1 bis 4, **dadurch gekennzeichnet,** daß der Elektromotor (24) zwei Wellenzapfen (62, 64) umfaßt, die den Kompressor (10) bzw. den Ventilator (26) antreiben können.

6. Klimaanlage nach Anspruch 5, **dadurch gekennzeichnet,** daß sie ein dichtes Gehäuse (48) umfaßt, in dem der Kompressor (10) und der gemeinsame Elektromotor (24) untergebracht sind.

7. Klimaanlage nach Anspruch 6, **dadurch gekennzeichnet,** daß das dichte Gehäuse (48) außerdem einen Teil (90, 92) einer Magnetkupplung (88) enthält, der drehfest mit einem der Wellenzapfen (64) verbunden ist, während sich ein anderer Teil (94, 96) der Kupplung außerhalb des Gehäuses befindet und drehfest mit dem Ventilator (26) verbunden ist.
